# EUROPÄISCHE PATENTSCHRIFT

(11) **EP 2 142 915 B1**
(45) Veröffentlichungstag und Bekanntmachung des Hinweises auf die Patenterteilung: **06.07.2016**
(21) Anmeldenummer: 08748770.8
(22) Anmeldetag: 23.04.2008
(51) Int. Cl.: G01N 27/07

(54) **GITTERSENSOR**
GRID SENSOR
CAPTEUR À GRILLE

(30) Priorität: 27.04.2007 DE 102007019926
(43) Veröffentlichungstag der Anmeldung: 13.01.2010
(73) Patentinhaber: Helmholtz-Zentrum Dresden - Rossendorf e.V., 01328 Dresden (DE)
(72) Erfinder: SCHLEICHER, Eckhard, 01219 Dresden (DE); SÜHNEL, Tobias, 09619 Voigtsdorf (DE); BARTHEL, Frank, 01309 Dresden (DE); FUTTERSCHNEIDER, Hein, 01833 Dürrröhrsdorf (DE); BODEN, Dieter, 01900 Grossröhrsdorf (DE)
(86) Internationale Anmeldenummer: PCT/DE2008/000694
(87) Internationale Veröffentlichungsnummer: WO 2008/131730

(56) Entgegenhaltungen:
- DE-A1- 19 649 011
- US-A- 4 644 263
- US-A- 5 210 499
- PRASSER H -M ET AL: "Bubble size measurement using wire-mesh sensors" FLOW MEASUREMENT AND INSTRUMENTATION ELSEVIER UK, Bd. 12, Nr. 4, August 2001 (2001-08), Seiten 299-312, XP002491654 ISSN: 0955-5986
- H-M PRASSER A BÖTTGER ET AL: "A new electrode-mesh tomograph for gas-liquid flows", FLOW MEASUREMENT AND INSTRUMENTATION, BUTTERWORTH-HEINEMANN, OXFORD, GB, vol. 9, 1 January 1998 (1998-01-01), pages 111-119, XP002389213, ISSN: 0955-5986

## Beschreibung

Die Erfindung betrifft einen Gittersensor zur Messung der Verteilung elektrischer oder nichtelektrischer Größen eines Mediums mittels eines zwei- oder mehrlagigen Elektrodengitters. Anwendungsgebiete sind die Bestimmung der Flüssigkeitsverteilung und des Füllstands in Gefäßen sowie die Untersuchung von Gas-Flüssigkeits-Zweiphasenströmungen, insbesondere in Rohrleitungen.

Für die Untersuchung von Zweiphasenströmungen bzw. von Flüssigkeitsverteilungen in Rohrleitungen und Gefäßen werden häufig Gittersensoren eingesetzt. In US 4 644 263, US 5 210 499 und DE 19 649 011 werden Anordnungen beschrieben, mit denen die elektrische Leitfähigkeit innerhalb eines Messquerschnitts mit Hilfe einer gitterförmigen Elektrodenanordnung und zugeordneter Elektronik gemessen werden kann. Bei diesen Anordnungen werden drahtförmige Elektroden einer Anregungselektrodenebene des Gitters nacheinander mit einem Spannungssignal beaufschlagt und an den Drahtelektroden einer parallel hierzu in geringem Abstand angeordneten Empfängerelektrodenebene des Gitters wird ein Stromsignal erfasst. Dadurch sind diese Anordnungen in der Lage, die Leitfähigkeit zwischen beiden Ebenen in den Kreuzungspunkten der Projektionen der Elektroden (im folgenden als "Kreuzungspunkte" bezeichnet) mit sehr hoher Messfrequenz zu bestimmen.

Weitere Ausgestaltungen von Gittersensoren werden in Prasser, H.-M. et al: Flow Measurement and Instrumentation, 12 (2001) 299-312 und Prasser, H.-M. et al: Flow Measurement and Instrumentation, 9 (1998) 111-119 diskutiert.

An Gittersensoren werden hohe Anforderungen seitens der Einsatzbedingungen gestellt. Sie werden oft in einem rauen industriellen Umfeld an Anlagen mit hohen Betriebsdrücken und Temperaturen eingesetzt und können dabei mit aggressiven Substanzen, wie Säuren, Laugen oder anderen Lösungsmitteln in Kontakt kommen. Ein besonderes Problem stellt die Herstellung elektrisch isolierender, druck- und temperaturfester Durchführungen für die Elektroden am Sensorrahmen dar, der oft als Rohrsegment aus Metall ausgeführt ist.

Für Gittersensoren, die für den Einsatz bei Drücken bis 7 MPa und Betriebstemperaturen von unter 120 °C bestimmt sind, ist es allgemein bekannt, das Sensorelektrodengitter auf einer Trägerplatine, zumeist eine Elektronikleiterplatte aus FR4, durch Weichlöten aufzubringen. Der zu vermessende Strömungsquerschnitt ist aus der Platine ausgespart. Die Sensorplatine wird nach der Bestückung mittels eines Gießharzes zwischen zwei Flanschsegmente eingegossen. Nach dem Aushärten des Gießharzes kann der Sensor dann wie ein Flansch in eine Rohrleitung oder ein anderes Gefäß durch Verschraubung einmontiert werden. Der Schwachpunkt dieser Gittersensoranordnung und ihrer Herstellungstechnologie ist häufig derVerguss. Dabei kommen gelegentlich Strom führende Teile der Sensorplatine (Leiterbahnen, Lötpunkte, Elektroden) mit den Metallstrukturen des Rahmens in Berührung, nach dem Aushärten fehlt die geforderte Druckdichtheit und/oder es treten Leckagen auf. Reste der Vergussmasse treten häufig in den Messquerschnitt ein, umgeben die Drähte und machen den Sensor damit unbrauchbar. Das Vergießen der komplexen Gitterstruktur im Sensorrahmen lässt sich kaum maschinell realisieren und erfordert daher hohen Fertigungsaufwand. Korrekturen bzw. Reparaturen sind nach dem Verguss nicht mehr möglich. Gittersensoren für hohe Drücke und Temperaturen werden noch aufwändiger und kostenintensiver hergestellt. Da bei Temperaturen oberhalb 120°C sowie bei Präsenz von Wasser bzw. Wasserdampf organische Gießharze versagen, werden bei solchen Sensoren die Sensordrähte über längere Distanzen durch Bohrungen bzw. Öffnungen des Sensormetallkörpers, gegebenenfalls unter Einsatz isolierender Keramiken, an Stellen niedriger Temperatur geführt, wo ein druckdichter Verguss möglich ist. (DE 10 2005 019 739.6-09). Diese Art der Konstruktion und Fertigung führt zu hohen Kosten.

Aufgabe der vorliegenden Erfindung ist es, einen Gittersensor vorzuschlagen, mit dem der Aufwand des Fertigungsprozesses sowie die Einbau- und Betriebskosten für den Gittersensor deutlich verringert und die Haltbarkeit sowie Druck- und Temperaturfestigkeit des Gittersensors gegenüber bisherigen Gittersensoren deutlich erhöht werden können.

Erfindungsgemäß wird die Aufgabe durch die Merkmale des Anspruchs 1 gelöst. Ausgestaltungen der Erfindung sind in den Unteransprüchen ausgeführt.

Die Erfindung wird nachfolgend anhand eines Ausführungsbeispiels für den Gittersensor erläutert.

In der zugehörigen Zeichnung zeigen
Figur 1 die 3D-Ansicht des kompletten Gittersensors,

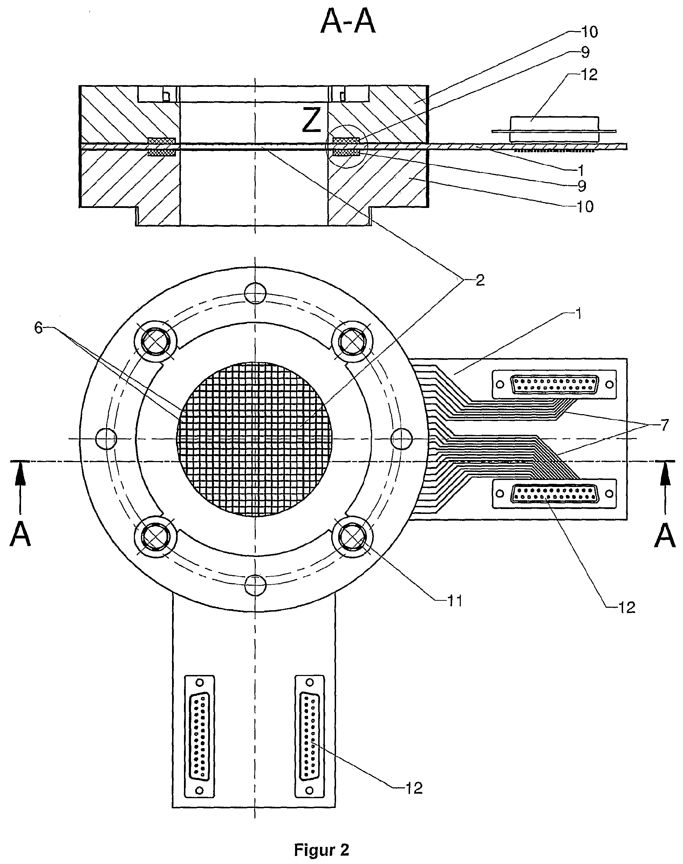

Figur 2 den Gittersensor im Schnitt und in der Draufsicht,

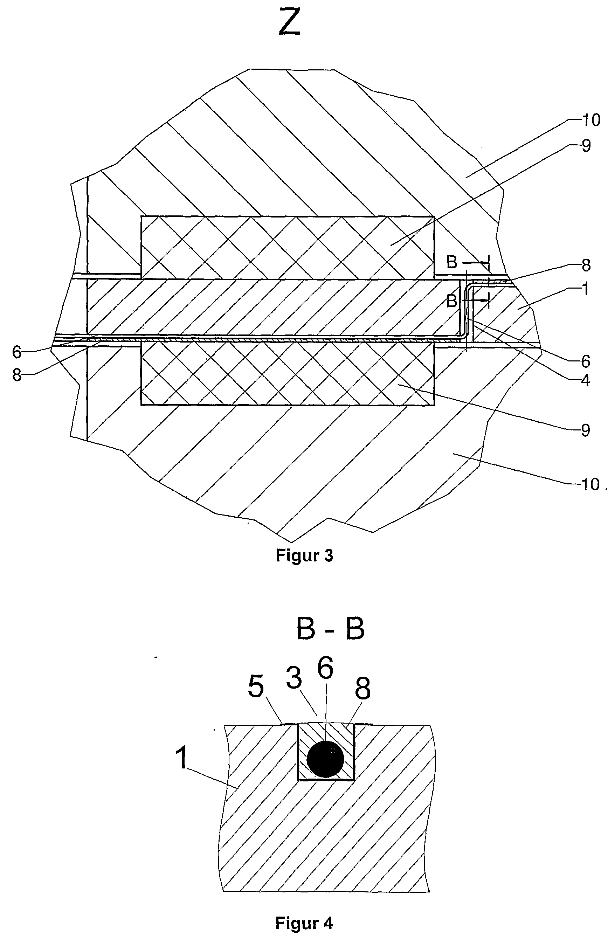

Figur 3 das Detail Z aus dem Schnitt nach Figur 2 und
Figur 4 den Teilschnitt B-B aus Figur 3.

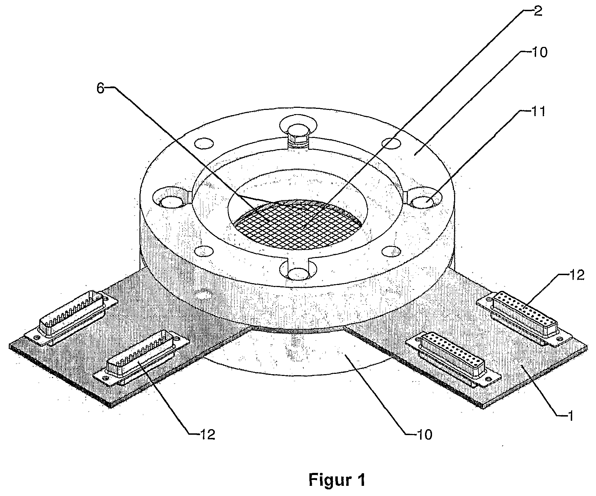

Der Gittersensor besteht aus einer Sensorplatine (1) mit einer elektrisch nicht leitenden Oberfläche. Die Sensorplatine kann ein Keramiksubstrat, eine mit einer abriebfesten Isolationsschicht überzogene Metallplatte oder eine faserverstärkte Kunststoffplatine, z. B. aus FR4, sein. Die Sensorplatine (1) verfügt über mindestens eine Aussparung, die dem später zu vermessenden Messquerschnitt (2) entspricht. Vom Rand des freien Messquerschnitts (2) aus verlaufen in der Sensorplatine (1) Kanäle (3) mit einer Tiefe von weniger als der halben Dicke der Sensorplatine (1) nach außen, die durch Fräsen in das Basismaterial eingebracht sind. Die Kanäle (3) sind dabei entsprechend der gewünschten Geometrie des Sensorgitters angeordnet. Üblicherweise sind, wie in der Figur 1 dargestellt, Drahtelektroden (6) in je zwei axial versetzten Ebenen aufgespannt, wobei die Drahtelektroden (6) innerhalb einer Ebene vorzugsweise parallel zueinander orientiert und die Drahtelektroden (6) verschiedener Ebenen in einem Winkel größer 0°, bei zwei Elektrodenebenen vorzugsweise orthogonal, zueinander orientiert sind. Zur Fixierung einer Drahtelektrode (6) sind jeweils zwei Kanäle (3) vorgesehen, die sich am Messquerschnitt (2) jeweils so gegenüber liegen, dass die Drahtelektrode (6) in der gewünschten Position den Messquerschnitt (2) überspannt. Dabei befinden sich die Kanäle (3) der ersten Sensorebene (Anregungsebene) auf der einen Seite der Sensorplatine (1) und die Kanäle (3) der zweiten Sensorebene (Empfängerebene) auf der anderen Seite der Sensorplatine (1), wobei die Drahtelektroden (6) einer Ebene gegenüber der anderen Ebene rechtwinklig zueinander angeordnet sind. In einer Entfernung vom Rand des freien Querschnitts (2) befindet sich in jedem Kanal (3) je eine Bohrung (4) die einen Durchgang zur gegenüberliegenden Seite der Sensorplatine (1) schafft. Von dieser Bohrung (4) aus setzt sich der jeweilige Kanal (3) auf der gegenüberliegenden Seite der Sensorplatine (1) fort. Die inneren Oberflächen der Kanäle (3) und der Bohrungen (4) sind mit einer dünnen Metallschicht (5) ausgekleidet, wobei auf die Isolierung zwischen den einzelnen Kanälen zu achten ist. Zwischen jeweils zwei im Messquerschnitt (2) auf derselben Seite der Sensorplatine (1) gegenüber liegenden Kanälen (3) ist eine Drahtelektrode (6) gespannt, die in die entsprechenden Kanäle (3) eingebettet, durch die in den Kanälen (3) befindlichen Bohrungen (4) zur jeweils anderen Seite der Sensorplatine (1) geführt und auf beiden Seiten der Sensorplatine (1) mittels einer leitfähiger Verschlussmasse (8), zum Beispiel Hart- oder Weichlot, im Kanal (3) fixiert ist. Der Verschluss mit leitfähiger Masse ist dabei derart ausgeführt, dass die im Kanal (3) befindliche leitfähige Verschlussmasse (8) jeweils bündig mit der Oberkante der Sensorplatine (1) abschließt und dabei keine Verbindung zu einem der benachbarten Kanäle (3) aufweist. Weiterhin ist jeweils mindestens einer der metallisierten Kanäle (3) einer jeden Drahtelektrode (6) über eine metallische Leiterbahn (7) mit einem Kabelanschlusspunkt oder Steckverbinder (12) elektrisch verbunden, der der elektrischen Verbindung der Sensorplatine (1) mit einer Verarbeitungselektronik dient. Die Sensorplatine (1) ist mittels zweier auf beiden Seiten aufgelegter Flachdichtringe (9) aus elektrisch nicht leitfähigem Material zwischen zwei Spannplatten (10) eingespannt. Zum Aufbringen der Druckspannung sind die beiden Spannplatten (10) mittels Anpressschrauben (11) gegeneinander verspannt. Zur Durchführung der Anpressschrauben (11) durch die Sensorplatine (1) sind in dieser entsprechende Aussparungen vorgesehen.

Nach demselben Schema der Anregung von Sendeelektroden und der Messung des elektrischen Stromes an den Empfängerelektroden eines solchen Gitters ist es auch möglich, Verteilungen anderer elektrischer Größen, wie die elektrische Kapazität oder Impedanz, oder gar nichtelektrische Größen zu messen, indem man die Drahtelektroden in den Kreuzungspunkten mit Festkörperstrukturen verbindet, deren Widerstandswert von einer nichtelektrischen physikalischen Umgebungsgröße abhängt.

### Gittersensor

### Bezugszeichenliste

- 1: - Sensorplatine mit kreisförmigem Ausschnitt
- 2: - Messquerschnitt
- 3: - Kanal
- 4: - Bohrung
- 5: - Metallschicht
- 6: - Drahtelektrode
- 7: - Leiterbahn
- 8: - Leitfähige Verschlussmasse
- 9: - Flachdichtungsring
- 10: - Spannplatte
- 11: - Anpressschraube
- 12: - Steckverbinder

## Patentansprüche

1. Gittersensor zur zweidimensionalen Messung elektrischer oder nichtelektrischer Größen eines Messquerschnitts, im Wesentlichen bestehend aus
- einer Sensorplatine (1) aus nicht leitendem Basismaterial mit mindestens einem Messquerschnitt (2),
- Drahtelektroden (6) die derart über den Messquerschnitt (2) gespannt sind, dass sie ein Gitter von mindestens zwei parallelen Ebenen aufspannen, wobei die erste Gitterebene auf der Oberseite der Sensorplatine (1) einen Satz von vorzugsweise parallel orientierten und sich nicht kreuzenden Drahtelektroden (6) umfasst und die zweite Gitterebene auf der Unterseite der Sensorplatine (1) ebenfalls einen Satz von vorzugsweise parallel orientierten und sich nicht kreuzenden Drahtelektroden (6) umfasst und die Drahtelektroden (6) der verschiedener Ebenen in einem Winkel größer 0°, vorzugsweise 90°, gegeneinander orientiert sind,
- einer elektrisch leitenden Verbindung (z. B. einer Leiterbahn (7)) zwischen jeder Drahtelektrode (6) und einem elektrischen Kabelanschlusspunkt oder Steckverbinder (12) am Rand der Sensorplatine (1),
**dadurch gekennzeichnet, dass**
- vom Rand des Messquerschnitts (2) aus Kanäle (3) mit einer Breite von mehr als dem Durchmesser der Drahtelektroden (6) und mit einer Tiefe von weniger als der halben Dicke der Sensorplatine (1) in dieser nach außen verlaufen,
- die Kanäle (3) mit einer Metallschicht (5) ausgekleidet sind,
- die Drahtelektroden (6) mit ihren beiden Enden jeweils in einem der gegenüberliegenden Kanäle (3) an der Peripherie des Messquerschnitts (2) eingelegt und in den Kanälen (3) mittels leitfähiger Verschlussmasse (8), wie Hartlot oder Weichlot, fixiert sind,
- die leitfähige Verschlussmasse (8) in jedem Kanal (3) mit der Oberseite der Sensorplatine (1) plan abschließt,
- die Sensorplatine (1) zwischen zwei Spannplatten (10) und jeweils einem auf der Oberseite sowie einem auf der Unterseite zwischen gelegten Flachdichtring (9) mittels einiger am Sensorumfang angeordneter Anpressschrauben (11) eingespannt ist.

2. Gittersensor nach Anspruch 1, **dadurch gekennzeichnet, dass**
- außerhalb des Flachdichtungsringes (9) in einer Entfernung von mindestens einigen Millimetern vom Rand des Messquerschnitts (2) aus Bohrungen (4) innerhalb der Kanäle (3) eingebracht sind, die einen Durchgang zur jeweils anderen Seite der Sensorplatine (1) schaffen,
- an der den Kanälen (3) gegenüberliegenden Seite der Sensorplatine (1) von den Bohrungen (4) ausgehend weitere Kanäle (3) von einigen Millimeter Länge in der Sensorplatine (1) weiterführend vorgesehen sind,
- die Bohrungen (4) und die Kanäle (3) mit einer Metallschicht (5) ausgekleidet sind,
- die Drahtelektroden (6), die über den Messquerschnitt (2) gespannt sind, durch die Kanäle (3) auf der einen Seite der Sensorplatine (1) und die Bohrungen (4) zu den Kanälen (3) auf der anderen Seite der Sensorplatine (1) geführt sind.

3. Gittersensor nach Anspruch 1, **dadurch gekennzeichnet, dass** in der Sensorplatine (1) Kanäle (3) verschiedener Tiefe eingearbeitet sind und mittels der in diesen Kanälen (3) mit elektrisch leitfähiger Verschlussmasse (8) fixierten und über den Messquerschnitt (2) gespannten Drahtelektroden (6) ein Gitter mit mehr als zwei Ebenen realisiert ist.

4. Gittersensor nach Anspruch 1, **dadurch gekennzeichnet, dass** mehrere Sensorplatinen (1) mittels zwischen gelegter Flachdichtringe (9) und gegebenenfalls zusätzlicher Abstandsplatten zwischen zwei Spannplatten (10) mittels einiger am Sensorumfang angeordneter Anpressschrauben (11) eingespannt und fixiert sind und somit als Mehrebenen-Gittersensor einsetzbar sind.

5. Gittersensor nach Anspruch 1, **dadurch gekennzeichnet, dass** die beiden Spannplatten (10) eine Aussparung aufweisen, die verhindert, dass die zwischengelegten Flachdichtringe (9) beim Anpressen in den Messquerschnitt (2) gepresst werden.

6. Gittersensor nach Anspruch 1, **dadurch gekennzeichnet, dass** die Flachdichtringe (9) durch o- bzw. x-Ringe ersetzt werden.

## Claims

1. Grid sensor for two-dimensional measurement of electrical or non-electrical variables of a measurement cross section, essentially comprising
- a sensor board (1) made of a dielectric base material with at least one measurement cross section (2),
- wire electrodes (6) spanning the measurement cross section (2) such that they span a grid with at least two parallel planes, wherein the first grid plane on the upper side of the sensor board (1) comprises a set of wire electrodes (6) which are preferably oriented in parallel and do not cross and the second grid plane on the lower side of the sensor board (1) likewise comprises a set of wire electrodes (6) which are preferably oriented in parallel and do not cross and the wire electrodes (6) of the various planes are oriented with respect to each other by an angle greater than 0°, preferably 90°,
- an electrically conductive connection (e.g. a conductor track (7)) between each wire electrode (6) and an electric wire connection point or plug connector (12) at the edge of the sensor board (1),
**characterized in that**
- channels (3) which are wider than the diameter of the wire electrodes (6) and have a depth of less than half the thickness of the sensor board (1) run outwardly from the edge of the measurement cross section (2) in said sensor board,
- the channels (3) are coated by a metal layer (5),
- the wire electrodes (6) are inserted into the periphery of the measurement cross section (2) with the two ends of said electrode each in one of the opposite channels (3) and said electrodes are fixed in the channels (3) by means of a conductive sealing compound (8) such as brazing solder or soft solder,
- in each channel (3) the conductive sealing compound (8) terminates in a planar fashion with the upper side of the sensor board (1),
- the sensor board (1) is clamped between two clamping plates (10) and respectively one flat sealing ring (9), inserted on the upper and lower side, by means of a few clamping screws (11) arranged on the edge of the sensor.

2. Grid sensor according to Claim 1, **characterized in that**
- outside of the flat sealing ring (9), at a distance of at least a few millimeters from the edge of the measurement cross section (2), bores (4) are introduced within the channels (3) and create a passage to the respective other side of the sensor board (1),
- on the opposite side of the sensor board (1) with respect to the channels (3), provision is made in the sensor board (1) for additional channels (3) which originate at the bores (4), have a length of a few millimeters and are continued in said sensor board,
- the bores (4) and channels (3) are coated by a metal layer (5),
- the wire electrodes (6) spanned across the measurement cross section (2) are led to the channels (3) on the other side of the sensor board (1) through the channels (3) on the one side of the sensor board (1) and the bores (4).

3. Grid sensor according to Claim 1, **characterized in that** channels (3) of various depths are worked into the sensor board (1) and a grid with more than two planes is implemented by means of the wire electrodes (6) which are fixed in these channels (3) by an electrically conductive sealing compound (8) and which span across the measurement cross section (2).

4. Grid sensor according to Claim 1, **characterized in that** a plurality of sensor boards (1) are clamped and fixed by means of inserted flat sealing rings (9) and possibly additional spacing plates between two clamping plates (10) are clamped and fixed by means of a few clamping screws (11) arranged on the edge of the sensor, and thus can be used as a multi-plane grid sensor.

5. Grid sensor according to Claim 1, **characterized in that** the two clamping plates (10) have a recess which prevents the inserted flat sealing rings (9) from being pressed into the measurement cross section (2) when being pressed on.

6. Grid sensor according to Claim 1, **characterized in that** the flat sealing rings (9) are replaced by 0 or X rings.

## Revendications

1. Capteur à grille destiné à la mesure bidimensionnelle de grandeurs électriques ou non électriques d'une section transversale de mesure, constitué essentiellement
- d'une carte imprimée de capteur (1) en matière de base non conductrice avec au moins une section transversale de mesure (2),
- de fils-électrodes (6) qui sont tendus par-dessus la section transversale de mesure (2) de sorte à former une grille d'au moins deux plans parallèles, le premier plan de grille comprenant sur la face supérieure de la carte imprimée de capteur (1) un jeu d'électrodesfils (6) de préférence orientées à la parallèle et ne se croisant pas et le deuxième plan de grille comprenant sur la face inférieure de la carte imprimée de capteur (1) également un jeu d'électrodes-fils (6) de préférence orientées à la parallèle et ne se croisant pas et les électrodes-fils (6) des différents plans étant orientées les unes par rapport aux autres sous un angle supérieur à 0°, de préférence de 90°,
- d'une connexion conductrice d'électricité (par ex. d'une piste conductive (7)) entre chaque électrode-fil (6) et d'un point de raccordement électrique de câble ou connecteur (12) sur le bord de la carte imprimée de capteur (1), **caractérisé en ce que**
- à partir du bord de la section transversale de mesure (2), des canaux (3) d'une largeur supérieure au diamètre des électrodes-fils (6) et d'une profondeur inférieure à la demiépaisseur de la carte imprimée de capteur (1) s'étendent vers l'extérieur dans cette dernière,
- les canaux (3) sont revêtus d'une couche métallique (5),
- avec leur deux extrémités, les électrodes-fils (6) sont insérées chaque fois dans l'un des canaux (3) opposés, sur la périphérie de la section transversale de mesure (2) et fixées dans les canaux (3) au moyen d'une masse d'occlusion (8) conductrice, comme du métal d'apport de brasage fort ou du métal d'apport de brasage tendre,
- dans chaque canal (3), la masse d'occlusion (8) conductrice se termine de manière plane sur la face supérieure de la carte imprimée de capteur (1),
- la carte imprimée de capteur (1) est tendue entre deux plaques de serrage (10) et chaque fois une bague d'étanchéité plate (9) intercalée sur la face supérieure et une bague d'étanchéité plate (9) intercalée sur la face inférieure au moyen de quelques vis de serrage (11) placées sur la périphérie du capteur.

2. Capteur à grille selon la revendication 1, **caractérisé en ce**
- **qu'**à l'extérieur de la bague d'étanchéité plate (9), à une distance d'au moins quelques millimètres du bord de la section transversale de mesure (2), des perçages (4) qui créent un passage vers chaque fois l'autre côté de la carte imprimée de platine (1) sont réalisés à l'intérieur des canaux (3),
- sur le côté de la carte imprimée de platine (1) qui est opposé aux canaux (3), dans la carte imprimée de platine (1), des canaux (3) supplémentaires d'une longueur de quelques millimètres sont prévus à partir des perçages (4),
- les perçages (4) et les canaux (3) sont revêtus d'une couche métallique (5),
- les fils-électrodes (6) qui sont tendus par-dessus la section transversale de mesure (2) sont guidés à travers les canaux (3) sur l'un des côtés de la carte imprimée de capteur (1) et les perçages (4) sont guidés vers les canaux (3) sur l'autre côté de la carte imprimée de capteur (1).

3. Capteur à grille selon la revendication 1, **caractérisé en ce que** dans la carte imprimée de platine (1) sont incorporés des canaux (3) de profondeur différente et une grille avec plus de deux plans est réalisée au moyen des électrodes-fils (6) fixées dans lesdits canaux (3) avec une masse d'occlusion (8) conductrice d'électricité et tendues par-dessus la section transversale de mesure (2).

4. Capteur à grille selon la revendication 1, **caractérisé en ce que** plusieurs cartes imprimées de capteur (1) sont tendues et fixées entre deux plaques de serrage (10) au moyen de quelques vis de serrage (11) placées sur la périphérie du capteur, au moyen de bagues d'étanchéité plates (9) intercalées et le cas échéant de plaques d'écartement supplémentaires et sont ainsi utilisables en tant que capteur à grille à plusieurs plans.

5. Capteur à grille selon la revendication 1, **caractérisé en ce que** les deux plaques de serrage (10) comportent un évidement qui empêche que les bagues d'étanchéité plates (9) intercalées soient pressées dans la section transversale de mesure (2), lors de l'exercice de la pression.

6. Capteur à grille selon la revendication 1, **caractérisé en ce qu'**on remplace les bagues d'étanchéité plates (9) par des joints toriques ou des joints x-ring.
